**Europäisches Patentamt**

**European Patent Office**

**Office européen des brevets**

(19)

(11) Numéro de publication : **0 333 536 B1**

(12) # FASCICULE DE BREVET EUROPEEN

(45) Date de publication du fascicule du brevet :
09.09.92 Bulletin 92/37

(51) Int. Cl.⁵ : **B60R 13/06**

(21) Numéro de dépôt : **89400523.0**

(22) Date de dépôt : **24.02.89**

(54) **Profil d'étanchéité de bas de glace mobile.**

(30) Priorité : **01.03.88 FR 8802523**

(43) Date de publication de la demande :
**20.09.89 Bulletin 89/38**

(45) Mention de la délivrance du brevet :
**09.09.92 Bulletin 92/37**

(84) Etats contractants désignés :
**BE CH DE GB IT LI LU NL SE**

(56) Documents cités :
**EP-A- 0 200 618
DE-A- 2 550 316
US-A- 4 521 027
US-A- 4 695 499**

(73) Titulaire : **HUTCHINSON
2 rue Balzac
F-75008 Paris (FR)**

(72) Inventeur : **Guillon, Henri
66, Avenue de Paris
F-78740 Vaux-sur-Seine (FR)**
Inventeur : **Malnoult, Hervé
14, rue du Vieux Puits
F-28110 Luce (FR)**

(74) Mandataire : **Orès, Bernard et al
Cabinet ORES 6, Avenue de Messine
F-75008 Paris (FR)**

EP 0 333 536 B1

# Description

L'invention a pour objet un profil d'étanchéité de bas de glace mobile.

On connaît déjà, dans de nombreuses réalisations, des joints d'étanchéité pour vitre ou glace d'automobile, montés fixes sur le cadre ou châssis de la porte du véhicule qu'ils équipent et désignés sous le nom de "coulisses de glace" lorsqu'ils forment l'encadrement supérieur et latéral de la baie propre à être ouverte ou fermée par ladite glace mobile tandis qu'ils sont désignés sous le nom de "profils d'étanchéité de bas de glace", ou de "lécheurs", lorsqu'ils sont prévus sur le bord inférieur de ladite baie. Si les lécheurs, de même que les coulisses, sont destinés à procurer l'étanchéité requise à l'eau, d'une part, et contribuer à l'isolation phonique, d'autre part, ils n'en ont pas moins des fonctions différentes. Ainsi, alors que les coulisses ont un rôle de guidage et de protection celui-ci n'est pas requis des lécheurs dont on attend, par contre, qu'ils contribuent à l'aspect esthétique du véhicule, tout en formant une saillie aussi faible que possible par rapport à la baie de la porte.

Pour satisfaire à cette dernière condition, les constructeurs d'automobiles souhaitent que la lèvre d'étanchéité, c'est-à-dire la partie proprement opératoire du lécheur, soit dirigée aussi près que possible de la perpendiculaire à la glace mobile. Une telle disposition a cependant pour conséquence que, lors du déplacement de ladite glace par rapport à la lèvre d'étanchéité, -et plus précisément lors du mouvement de descente de la glace provoquant l'ouverture de la baie-, la lèvre d'étanchéité entraînée à son extrémité libre par le frottement de la glace est recourbée de manière telle qu'elle n'assure plus son rôle de manière satisfaisante et cela nonobstant le fait que ladite lèvre est munie à son extrémité libre de moyens favorisant le glissement sur la vitre ou glace avec laquelle elle coopère.

C'est, par conséquent, un but de l'invention de fournir un profil d'étanchéité de bas de glace mobile, ou lécheur qui, remplissant les conditions imposées par les constructeurs d'automobiles en ce qui concerne le positionnement relatif de la lèvre d'étanchéité et de la glace, ne présente pas, cependant, l'inconvénient rappelé ci-dessus des dispositifs connus.

C'est, aussi un but de l'invention, de fournir un tel profil ou lécheur qui, de fabrication aussi simple que celle des dispositifs connus, procure cependant par rapport à ces derniers une amélioration de l'étanchéité à l'eau et à l'isolation phonique.

Le problème est résolu dans un profil d'étanchéité de bas de glace mobile ou lécheur, comportant un talon ou pince de montage et de fixation sur un cadre ou châssis de porte et une première lèvre d'étanchéité portée par ledit talon et propre à coopérer avec ladite glace, par le fait que, selon l'invention, le lécheur comprend, en outre, une seconde lèvre d'étanchéité solidaire du talon et adjacente à ladite première lèvre dans sa partie opératoire distante du talon, ladite seconde lèvre étant conformée et placée de manière telle par rapport à la première lèvre qu'elle s'oppose, -par un effet d'arc-boutement-, au repliement de ladite première lèvre lors du mouvement de coulissement de la glace dans la direction qui tend à l'infléchir.

Selon une autre caractéristique de l'invention, chacune des lèvres d'étanchéité est munie de moyens favorisant le glissement sur la vitre ou glace avec laquelle ils sont propres à coopérer, lesdits moyens favorisant le glissement étant disposés au moins en partie sur la face de la première lèvre en regard de la seconde et sur la majeure partie de la face de la seconde lèvre en regard de la vitre ou glace.

Dans une réalisation préférée, la pince ou talon est à section droite générale en $\Pi$, à ailes sensiblement parallèles réunies par une âme transversale, la première lèvre d'étanchéité étant reliée par sa base à ladite âme et la seconde lèvre d'étanchéité étant reliée par sa base à l'extrémité d'une aile dudit talon.

Au voisinage de sa liaison à l'aile du talon, ladite seconde lèvre d'étanchéité présente une partie à déformabilité plus grande que le reste de la lèvre, de sorte que, en conjugaison avec les moyens favorisant le glissement de ladite lèvre sur la vitre ou glace, ledit glissement est maintenu à une valeur satisfaisante nonobstant le fait que le lécheur selon l'invention est à deux lèvres d'étanchéité et non pas à une seule lèvre comme dans les dispositifs connus.

Selon une autre caractéristique de l'invention, les moyens favorisant le glissement des lèvres d'étanchéité sur la vitre ou glace mobile et des lèvres l'une sur l'autre sont en un matériau approprié, rapporté sur lesdites lèvres lors de la fabrication du lécheur par co-extrusion d'élastomère et/ou de plastomère, comme du caoutchouc ou du PVC, ou d'un matériau thermoplastique élastomère. Les procédés de co-extrusion sont préférés tant pour la fabrication en une seule opération du talon, des lèvres d'étanchéité et des moyens favorisant le glissement qui leur sont associés que pour assurer la rigidité du talon, par exemple à l'aide d'une armature incorporée dans celui-ci et régnant dans les ailes et l'âme qui les réunit, ou encore pour la fabrication dudit lécheur en des matériaux élastomères ou plastomères présentant des caractéristiques de dureté différente, par exemple de plus grande dureté pour le talon dont on souhaite qu'il soit rigide et de plus faible dureté pour les lèvres dont on souhaite qu'elles soient déformables.

Dans une variante de réalisation, les moyens favorisant le glissement sont rapportés par flocage sur au moins une des deux lèvres d'étanchéité.

D'autres caractéristiques et avantages de l'invention apparaîtront de la description qui suit, faite à titre d'exemple et en référence au dessin annexé dans lequel :

– la figure 1 est une vue partielle illustrant une partie de carrosserie d'automobile ;

– la figure 2 est une vue en coupe transversale d'un lécheur selon l'invention.

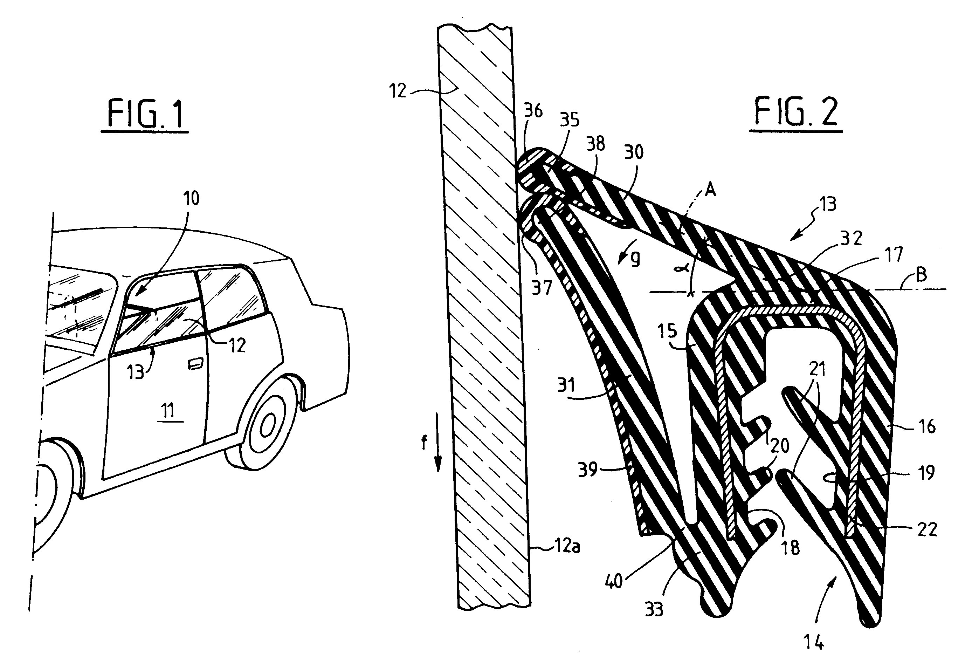

Celui-ci est prévu à la partie inférieure de la baie 10 d'une porte 11 d'automobile, propre à être fermée par une vitre ou glace coulissante 12, figure 1, ladite vitre ou glace étant guidée latéralement par des coulisses de glace, non représentées, et étant propre à coopérer avec une coulisse supérieure s'étendant sensiblement parallèlement au lécheur 13. Ce dernier comprend essentiellement une pince ou talon 14, à section droite générale en Π, figure 2, à ailes 15 et 16 sensiblement parallèles réunies par une âme 17, les ailes 15 et 16 présentant sur leurs faces en regard 18 et 19, respectivement, des saillies ou nervures comme 20 et 21 de fixation sur le cadre ou châssis de la porte 11, non représenté. Dans la forme de réalisation décrite et illustrée, le talon 14 est armé par un profilé en U, 22, avantageusement métallique, par exemple en aluminium, et qui est noyé dans la masse du matériau constitutif du profil, ledit matériau pouvant être un matériau élastomère, comme un caoutchouc, un matériau plastomère comme du PVC, ou un matériau thermoplastique élastomère.

L'invention envisage également dans son cadre de réaliser le profil non pas en un seul matériau, mais en des matériaux différant entre eux par certaines de leurs propriétés, par exemple leur dureté, la pince ou talon 14 étant alors de préférence réalisée en un matériau de plus grande dureté que celui des lèvres d'étanchéité.

Selon l'invention, à la pince ou talon 14 sont associées deux lèvres d'étanchéité, 30 et 31, dont la première est reliée par sa base 32 à l'âme 17 du talon et dont la seconde est reliée par sa base 33 à l'extrémité de l'aile 15 dudit talon. De façon plus précise, la lèvre 30 dont l'extrémité libre 35 est en partie recouverte d'un revêtement 36 favorisant le glissement s'étend sensiblement orthogonalement à la glace 12, lorsque cette dernière n'obture pas la baie 10, et est d'une longueur telle que ledit revêtement 36 vienne au contact de la face 12a de la vitre ou glace 12 lorsque cette dernière obture partiellement ou totalement la baie 10, le plan moyen A de la lèvre 30 formant alors un angle α, petit, avec le plan moyen B de l'âme 17.

De façon analogue, la lèvre 31 est munie de moyens 37 favorisant le glissement, lesquels règnent cependant non seulement sur la partie d'extrémité 38 de la lèvre mais également sur toute la surface 39 de celle-ci en regard de la face 12a de la vitre ou glace 12, la longueur de la lèvre 31 étant telle que ces moyens de glissement 37 sont au contact de la face 12a de la vitre ou glace 12 lorsque celle-ci obture partiellement ou totalement la baie 10. La lèvre 31, qui présente au voisinage de sont extrémité reliée à l'aile 15 une partie 40 de plus grande déformabilité que le reste de la lèvre, est légèrement arquée, d'une part, et est d'une longueur et d'une position telles que dans la condition opératoire du profil d'étanchéité l'extrémité 38 de ladite lèvre est accolée à l'extrémité 35 de la première lèvre 30, figure 2, avec contact des moyens de glissement respectifs 37 et 36 desdites lèvres. Il en résulte que, lors du mouvement de coulissement de la glace 12 dans le sens tendant à dégager la baie 10, et qui est celui montré par la flèche f sur la figure 2, la seconde lèvre 31 s'oppose par un effet d'arc-boutement au repliement de la lèvre 30 qui tend à être infléchie par pivotement dans le sens de la flèche g.

La présence de la lèvre 31 est cependant sans incidence lors du mouvement de la glace ou vitre 12 dans le sens inverse de celui montré par la flèche f, tant en raison de sa possibilité de mouvement dans la partie 40 de liaison à la pince 14, qu'en raison de la coopération entre eux, et avec la vitre ou glace 12, des moyens de glissement 36 et 37.

Lesdits moyens qui sont par exemple à base de polymères ou de copolymères de polyoléfines sont avantageusement co-extrudés lors de la fabrication du profil ou lécheur en matériau élastomère ou plastomère.

Ils peuvent également, bien entendu, et sans sortir du cadre de l'invention, être rapportés par tout autre moyen approprié comme par trempage, pulvérisation, etc... .

Ils peuvent, en particulier, être rapportés sur au moins une des lèvres par un flocage, ou analogue, d'un matériau approprié.

## Revendications

1. Profil d'étanchéité (13) de bas de glace mobile (12), ou lécheur, notamment de porte (11) d'automobile, comprenant un talon (14) ou pince de fixation et de montage sur le cadre ou châssis de la porte et une première lèvre d'étanchéité (30) portée par ledit talon (14) et propre à coopérer avec ladite glace ou vitre, caractérisé en ce qu'il comprend en outre une seconde lèvre d'étanchéité (31) solidaire dudit talon (14) et adjacente à ladite première lèvre (30) dans sa partie opératoire distante du talon (14), ladite seconde lèvre (31) étant conformée et positionnée de manière telle par rapport à la première lèvre (30) qu'elle s'oppose, par un effet d'arc-boutement, au repliement de ladite première lèvre lors du mouvement de coulissement de la glace (12) dans la direction qui tend à l'infléchir.

2. Profil d'étanchéité ou lécheur selon la revendication 1, caractérisé en ce que chacune des lèvres d'étanchéité (30, 31) est munie de moyens (36, 37) favorisant le glissement sur la vitre ou glace (12) avec laquelle ils sont propres à coopérer, lesdits moyens favorisant le glissement étant disposés au moins en partie sur la face de la première lèvre (30) en regard de la seconde et sur la majeure partie de la face (39) de la seconde lèvre (31) en regard de la vitre ou glace (12).

3. Profil d'étanchéité ou lécheur selon la revendication 1 ou la revendication 2, caractérisé en ce que la pince ou talon (14) est à section droite générale en Π à ailes (15, 16) sensiblement parallèles réunies par une âme transversale (17), la première lèvre d'étanchéité (30) étant reliée par sa base (32) à ladite âme (17) et la seconde lèvre d'étanchéité (31) étant reliée par sa base (33) à l'extrémité d'une aile (15) dudit talon (14).

4. Profil d'étanchéité ou lécheur selon la revendication 3, caractérisé en ce que ladite seconde lèvre d'étanchéité (31) présente au voisinage de sa liaison à l'aile (15) du talon ou pince (14) une partie (40) à plus grande déformabilité que le reste de ladite lèvre (31).

5. Profil d'étanchéité ou lécheur selon l'une quelconque des revendications précédentes, caractérisé en ce que le talon ou pince (14) comporte une armature (22) de raidissement de ladite pince ou talon (14) noyée dans le matériau constitutif de celui-ci.

6. Profil d'étanchéité ou lécheur selon l'une quelconque des revendications précédentes, caractérisé en ce qu'il est réalisé par extrusion ou co-extrusion d'un matériau élastomère, comme du caoutchouc, d'un matériau plastomère, comme du PVC, ou d'un matériau thermoplastique élastomère, ou de plusieurs matériaux à caractéristiques différentes, notamment en ce qui concerne leur dureté ou leur souplesse.

7. Profil d'étanchéité ou lécheur selon l'une quelconque des revendications précédentes, caractérisé en ce que les moyens favorisant le glissement sont en un matériau approprié rapporté sur les lèvres d'étanchéité par co-extrusion.

8. Profil d'étanchéité ou lécheur selon l'une quelconque des revendications 1 à 6, caractérisé en ce que les moyens favorisant le glissement sont rapportés sur l'une des lèvres au moins par flocage.

**Patentansprüche**

1. Abdichtungsprofil für das Unterteil eines beweglichen Fensters, oder Abstreifer, insbesondere für eine Kraftfahrzeugtür, umfassend einen Ansatz oder eine Klemme für die Befestigung und die Montage auf dem Rahmen oder Chassis der tür und eine erste Abdichtungslippe, die durch den Ansatz gehalten und dazu geeignet ist, mit dem Fenster oder der Scheibe zusammenzuwirken, dadurch **gekennzeichnet**, daß es bzw. er außerdem eine zweite Abdichtungslippe (31) umfaßt, die mit dem Ansatz (14) fest verbunden und der erwähnten ersten Lippe (30) in ihrem operativen teil, welcher von dem Ansatz (14) entfernt ist, benachbart ist, wobei die zweite Lippe (31) in einer solchen Weise mit Bezug auf die erste Lippe (30) gestaltet und positioniert ist, daß sie sich durch eine Strebebogenwirkung dem Einbiegen der ersten Lippe während der Verschiebebewegung des Fensters (12) in der Richtung, welche die tendenz hat, diese durchzubiegen, entgegensetzt.

2. Abdichtungsprofil oder Abstreifer nach Anspruch 1, dadurch **gekennzeichnet**, daß jede der Abdichtungslippen (30, 31) mit Mitteln (36, 37) versehen ist, welche das Gleiten auf der Scheibe oder dem Fenster (12), womit sie geeignet sind zusammenzuwirken, begünstigt, wobei die erwähnten Mittel, welche das Gleiten begünstigen, wenigstens teilweise auf der Fläche der ersten Lippe (30) gegenüber der zweiten und auf dem größeren teil der Fläche (39) der zweiten Lippe (31) gegenüber der Scheibe oder dem Fenster (12) angeordnet sind.

3. Abdichtungsprofil oder Abstreifer nach Anspruch 1 oder Anspruch 2, dadurch **gekennzeichnet**, daß die Klemme oder der Ansatz (14) einen allgemein π-förmigen Querschnitt mit im wesentlichen parallelen Schenkeln (15, 16), die durch einen Quersteg (17) vereinigt sind, hat, wobei die erste Abdichtungslippe (30) durch ihre Basis (32) mit dem erwähnten Steg (17) verbunden ist, während die zweite Abdichtungslippe (31) durch ihre Basis (33) mit dem Ende eines Schenkels (15) des Ansatzes (14) verbunden ist.

4. Abdichtungsprofil oder Abstreifer nach Anspruch 3, dadurch **gekennzeichnet**, daß die zweite Abdichtungslippe (31) in der Nähe ihrer Verbindung mit dem Schenkel (15) des Ansatzes oder der Klemme (14) einen teil (40) von größerer Deformierbarkeit, als es der Rest dieser Lippe (31) ist, aufweist.

5. Abdichtungsprofil oder Abstreifer nach irgendeinem der vorhergehenden Ansprüche, dadurch **gekennzeichnet,** daß der Ansatz oder die Klemme (14) eine Armierung (22) für die Aussteifung der Klemme oder des Ansatzes (14) hat, die in dem Material, welches dieselbe bzw. denselben bildet, eingebettet ist.

6. Abdichtungsprofil oder Abstreifer nach irgendeinem der vorhergehenden Ansprüche, dadurch **gekennzeichnet,** daß es bzw. er durch Extrusion oder Coextrusion eines Elastomermaterials, wie Kautschuk, eines Plastomermaterials, wie PVC, oder eines thermoplastischen Elastomers, oder mehrerer Materialien mit unterschiedlichen Charakteristika, insbesondere was ihre Festigkeit oder ihre Nachgiebigkeit anbetrifft, realisiert ist.

7. Abdichtungsprofil oder Abstreifer nach irgendeinem der vorhergehenden Ansprüche, dadurch **gekennzeichnet,** daß die Mittel, welche das Gleiten begünstigen, aus einem geeigneten Material, das auf die Abdichtungslippen durch Coextrusion aufgetragen ist, sind.

8. Abdichtungsprofil oder Abstreifer nach irgendeinem der Ansprüche 1 bis 6, dadurch **gekennzeichnet,** daß die Mittel, welche das Gleiten begünstigen, auf die eine der Lippen wenigstens durch Beflocken aufgetragen sind.

## Claims

1 Sealing strip (**13**) for lower part of mobile window or pane (**12**), or wiper, in particular of a door (**11**) of a motor vehicle, comprising a heel (**14**) or clamp for fixing or mounting on the door panel or frame, and a first sealing lip (**30**) carried by said heel (**14**) and capable of cooperating with said window or pane, characterized in that it also comprises a second sealing lip (**31**) integral with said heel (**14**) and adjacent to said first lip (**30**) in its operating part distant from the heel (**14**), said second lip (**31**) being shaped and positioned so that, with respect to the first lip (**30**), it opposes, by a buttress effect, the folding of said first lip during the sliding movement of the pane (**12**) in the direction that tends to bend it.

2 Sealing strip or wiper as claimed in Claim 1, characterized in that each of the sealing lips (**30,31**) is provided by means (**36,37**) favouring sliding on the window or pane (**12**) with which they are designed to cooperate, said means favouring sliding being placed at least partly on the side of the first lip (**30**) opposite the second and on most of the side (**39**) of the second lip (**31**) opposite the window or pane (**12**).

3 Sealing strip or wiper as claimed in Claim 1 or Claim 2, characterized in that the clamp or heel (**14**) has a generally $\pi$-shaped cross-section with approximately parallel flanges (**15,16**) connected by a transverse web (**17**), the first sealing lip (**30**) being connected by its base (**32**) to said web (**17**) and the second sealing lip (**31**) being connected by its base (**33**) to the end of a flange (**15**) of said heel (**14**).

4 Sealing strip or wiper as claimed in Claim 3, characterized in that said second lip (**31**) exhibits, in the neighbourhood of its connection with the flange (**15**) of the heel or clamp (**14**), a portion (**40**) of greater deformability than the rest of said lip (**31**).

5 Sealing strip or wiper as claimed in any above claim, characterized in that the heel or clamp (**14**) comprises a reinforcement (**22**) for stiffening said clamp or heel (**14**) sunk in the material making up the clamp or heel.

6 Sealing strip or wiper as claimed in any above claim, characterized in that it is made by extrusion or co-extrusion of an elastomer, such as rubber, a plastomer, such as PVC, or a thermoplastic elastomer, or of two or materials with different characteristics, especially concerning their hardness or flexibility.

7 Sealing strip or wiper as claimed in any above claim, characterized in that the means favouring sliding are of a suitable material applied to the sealing lips by co-extrusion.

8 Sealing strip or wiper as claimed in any Claim 1 to 6, characterized in that the means favouring sliding are applied to at least one of the lips by flocking.

FIG. 2

FIG. 1